# EUROPÄISCHE PATENTSCHRIFT

(11) **EP 1 236 601 B1**
(45) Veröffentlichungstag und Bekanntmachung des Hinweises auf die Patenterteilung: **07.06.2006**
(21) Anmeldenummer: 02003774.3
(22) Anmeldetag: 20.02.2002
(51) Int. Cl.: B60J 7/047

(54) **Fahrzeugdach mit zwei bewegbaren Deckeln**
Vehicle roof with two movable panels
Toit de véhicule avec deux panneaus mobiles

(30) Priorität: 01.03.2001 DE 10110012
(43) Veröffentlichungstag der Anmeldung: 04.09.2002
(73) Patentinhaber: Webasto Vehicle Systems International GmbH, 82131 Stockdorf (DE)
(72) Erfinder: Schätzler, Walter, 82319 Starnberg (DE); Pfalzgraf, Manfred, 82211 Herrsching (DE)
(74) Vertreter: Wiese, Gerhard

(56) Entgegenhaltungen:
- DE-A- 3 801 881
- DE-C- 19 756 021
- DE-C- 19 952 317
- US-A- 6 053 568
- US-A- 6 056 352

## Beschreibung

Die Erfindung betrifft ein Fahrzeugdach mit zwei bewegbaren Deckeln gemäß dem Oberbegriff des Patentanspruchs 1.

Aus der DE 197 13 347 A1 ist ein öffnungsfähiges Fahrzeugdach bekannt, bei dem ein vorderer Deckel mit seiner Hinterkante über das feste Fahrzeugdach ausstellbar und mittels hinterer Stützhebel an Gleitelementen in Führungen zu beiden Seiten einer festen hinteren Deckelplatte verschiebbar ist. Nachteilig bei einem derartigen Fahrzeugdach ist, daß nur der vordere Deckel in eine LüfterPosition geschwenkt werden kann, während für die hinteren Fahrzeug- Insassen auf Grund des festen hinteren Deckels keine zugfreie Be- oder Entlüftungsmöglichkeit besteht.

Aus der DE 38 02 380 A1 ist ein Fahrzeugdach mit zwei Deckeln bekannt, die beide als Spoilerdeckel mit ihrer Hinterkante ausstellbar und zur Freigabe einer Dachöffnung verschiebbar sind. Derartige Spoilerdeckel haben generell den Nachteil, daß die Abstützung der Deckel jeweils nur etwa im vorderen Drittel erfolgt. Daher sind derartige Dächer für Fahrzeuge mit einer großen Höchstgeschwindigkeit nur begrenzt geeignet.

Aufgabe der Erfindung ist es, ein Fahrzeugdach zu schaffen, daß bei stabiler Führung der Deckel die Einstellung sehr variabler Belüftungmöglichkeiten ermöglicht.

Diese Aufgabe wird durch die Merkmale des Patentanspruchs 1 gelöst. Vorteilhafte Ausgestaltungen der Erfindung sind in den Unteransprüchen angegeben.

Im Gegensatz zur eingangs genannten DE 197 13 347 A1 weist die Erfindung den Vorteil auf, daß der hintere Deckel ebenfalls ein bewegbarer Deckel mit schwenkbarer Hinterkante ist, so daß auch für die Passagiere im hinteren Bereich des Fahrzeuginnenraums gute Belüftungsmöglichkeiten gegeben sind. Eine stabile Abstützung des vorderen Deckels und ein kompaktes Übereinanderfahren beider Deckel mit einer Freigabe einer entsprechend großen Dachöffnung wird dadurch ermöglicht, daß der hintere Deckel Führungen zur Führung eines hinteren Gleitelements des vorderen Deckels aufweist.

Bevorzugt tritt das hintere Gleitelement des vorderen Deckels erst bei einer Verschiebung des vorderen Deckels nach hinten in die Führung am hinteren Deckel ein.

Für den hinteren Deckel ergeben sich verschiedene Ausführungsmöglichkeiten. Der hintere Deckel kann nach Art eines außen geführten Schiebedachs oder eines Spoilerdachs längs dachfesten Führungen oberhalb eines hinteren Teils des festen Fahrzeugdachs verschiebbar sein; er kann zum anderen auch nach Art eines Schiebe-Hebe-Dachs unterhalb des hinteren Teils des festen Fahrzeugdachs verschiebbar sein. In jedem Falle ist seine Hinterkante zur Einstellung einer Lüfterposition ausschwenkbar.

Besonders bevorzugt ist der vordere Deckel auch bei verschwenktem und/oder verschobenem hinteren Deckel mit seinem hinteren Gleitelement in dessen Führungen verschiebbar.

Der vordere Deckel und der hintere Deckel sind bevorzugt weitestgehend unabhängig voneinander bewegbar. Nur wenn sich beide Deckel in ausgestellter und teilweise übereinandergefahrer Position befinden, ist es sinnvoll, wenn aus dieser Lage heraus eine Schwenkbewegung synchron erfolgt.

Der vordere Deckel und der hintere Deckel sind vorteilhafterweise jeweils durch einen motorischen Antrieb, insbesondere einen Elektromotor bewegbar. Die beiden Antriebe werden bevorzugt von einem gemeinsamen Steuergerät angesteuert, das in Abhängigkeit von der jeweiligen Position der beiden Deckel bestimmte Bewegungen der Antriebe zuläßt und andere Bewegungen blockiert. Dadurch können Blockierungen und Beschädigungen der Mechanik wirksam vermieden werden.

Nachfolgend wird ein Ausführungsbeispiel eines erfindungsgemäßen Fahrzeugdachs unter Bezugnahme auf die Zeichnungen näher erläutert. Es zeigt:
- Fig. 1: einen schematischen Längsschnitt durch ein Fahrzeugdach in geschlossener Position,
- Fig. 2: den Längsschnitt gemäß Fig. 1 bei ausgestelltem und teilweise nach hinten verfahrenem vorderen Deckel,
- Fig. 3: den Längsschnitt gemäß Fig. 2 bei ausgestelltem hinteren Deckel und
- Fig. 4: eine schematische perspektivische Darstellung des Fahrzeugdachs mit ausgestellten, übereinandergefahrenen Deckeln.

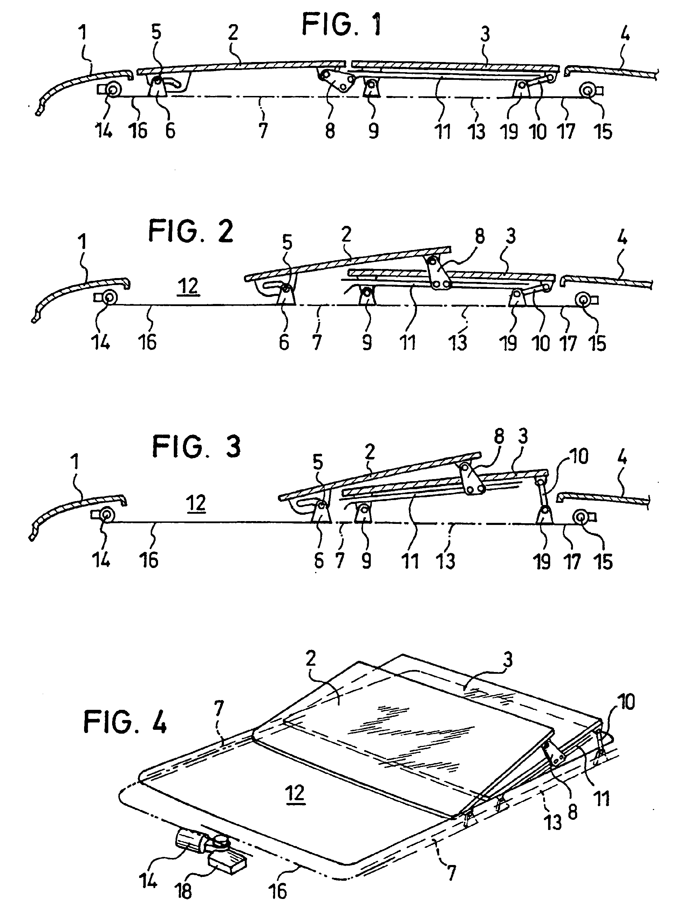

Im festen Fahrzeugdach 1 ist eine große Dachöffnung 12 vorgesehen, die mittels zweier hintereinander angeordneter Deckel 2 bzw. 3 verschließbar oder zumindest teilweise freilegbar ist. Der vordere Deckel 2 ist mit einer Schwenkachse 5 an vorderen Gleitelementen 6 schwenkbar angelenkt, so daß er mit seiner Hinterkante über das feste Fahrzeugdach 1 in eine Lüfterposition ausstellbar ist. Die Ausstellbewegung wird durch hintere Gleitelemente 8 erzeugt, die Teil einer Mechanik sind, die im Detail nicht gezeigte Ausstell- bzw. Stützhebel aufweist, wie diese aus der eingangs genannten DE 197 13 347 A1 bekannt sind. Die vorderen Gleitelemente 6 und die hinteren Gleitelemente 8 sind in der in Fig. 1 gezeigten Schließposition längs schematisch angedeuteter Führungen 7 verschiebbar gelagert.

Der hintere Deckel 3 ist nahe seiner Vorderkante mittels einer Schwenkachse an vorderen Gleitelementen 9 schwenkbar angelenkt. Mittels einer Ausstellmechanik 10 ist er mit seiner Hinterkante über das feste Fahrzeugdach 1 ausstellbar. An den hinteren Deckel 3 schließt sich ein hinterer Teil 4 des festen Fahrzeugdachs 1 an. Je nach Ausführungsform kann der hintere Deckel 3 entweder nur als Hebedach schwenkbar ausgeführt sein, so daß er die in Fig. 3 dargestellte Lüfterposition oder die in Fig. 1 dargestellte Schließposition einnehmen kann. Der hintere Deckel 3 kann jedoch auch nach Art eines Spoilerdachs oder eines außen geführten Schiebedachs (wie der vordere Deckel in der DE 197 13 347 A1) ausgebildet sein und in seiner ausgestellten Position längs Führungen 13 oberhalb des Teils 4 des festen Fahrzeugdachs 1 nach hinten verschiebbar sein. Schließlich kann der hintere Deckel 3 auch nach Art eines Schiebe-Hebe-Dachs ausgebildet sein, so daß er zusätzlich zu der in Fig. 3 dargestellten Lüfterposition auch mit seiner Hinterkante absenkbar und unter den Teil 4 des festen Fahrzeugdachs 1 verschiebbar ist.

Die Besonderheit der vorliegenden Erfindung besteht darin, daß am hinteren Deckel 3 Führungen 11 angeordnet sind, welche zur Aufnahme der hinteren Gleitelemente 8 des vorderen Deckels 2 bei einer Verschiebung desselben nach hinten dienen. Die Aufnahme der hinteren Gleitelemente 8 in den Führungen 11 erfolgt unabhängig davon, in welcher Position sich der hintere Deckel 3 befindet. Dieser kann sich - wie in Fig. 2 dargestellt - in seiner Schließposition befinden, so daß die Dachöffnung 12 nur im vorderen Bereich durch den vorderen Deckel 2 teilweise freigelegt wird. Beim Übergang von der Fig. 1 in die Fig. 2 haben sich die Ausstellhebel am hinteren Gleitelement 8 aufgestellt, so daß die Hinterkante des vorderen Deckels 2 angehoben wird. Die hinteren Gleitelemente 8 sind ferner an der Stoßstelle zwischen beiden Deckeln 2 bzw. 3 aus der Führung 7 in die Führung 11 übergetreten, so daß das hintere Ende des vorderen Deckels 2 nunmehr durch die Gleitelemente 8 und die Führungen 11 am hinteren Deckel 3 gelagert ist. Die Führungen 11 können zur Erleichterung des Eintritts der Gleitelemente 8 an ihren vorderen Enden trichterförmig erweitert sein.

Unabhängig von der Position des vorderen Deckels 2 kann ausgehend von der Schließposition gemäß Fig. 1 der hintere Deckel 3 mit seiner Hinterkante in eine Lüfterposition ausgestellt werden, wie dies in Fig. 3 dargestellt ist. Diese Ausstellbewegung kann auch dann erfolgen, wenn der vordere Deckel 2 bereits die in Fig. 2 dargestellte Öffnungsposition eingenommen hat. Der vordere Deckel 2 kann ebenfalls unabhängig von der Position des hinteren Deckels 3 nach hinten oder nach vorne verfahren werden. So kann der vordere Deckel 2 beispielsweise aus der in Fig. 3 dargestellten Öffnungsposition in seine Schließposition gemäß Fig. 1 verfahren werden, ohne daß der hintere Deckel 3 dabei aus seiner Lüfterposition abgesenkt wird. Schließlich können auch beide Deckel 2 bzw. 3 in der in Fig. 3 dargestellten Position im Paket längs den Führungen 7 bzw. 13 in der Dachöffnung 12 verfahren werden, so daß unterschiedlich große Teilöffnungen vorne und hinten einstellbar sind.

Der vordere Deckel 2 ist über ein Antriebskabel 16 mit einem Antrieb 14 verbunden, der vorzugsweise als Elektromotor ausgebildet und unter dem vorderen Teil des festen Fahrzeugdachs 1 angeordnet ist. Das Antriebskabel 16 ist zug- und drucksteif in parallel zu den Führungen 7 bzw. 13 angeordneten Führungskanälen geführt. Es ist am hinteren Gleitelement 8 befestigt und bewirkt die Ausstellbewegung der Ausstellhebel und die Verschiebung der Gleitelemente 8 in den Führungen 7 bzw. 11.

Der hintere Deckel 3 ist über ein Antriebskabel 17 mit einem Antrieb 15 verbunden, der vorzugsweise als Elektromotor ausgebildet und unter dem hinteren Teil 4 des festen Fahrzeugdachs 1 angeordnet ist. Das Antriebskabel 17 ist zug- und drucksteif in parallel zu den Führungen 7 bzw. 13 angeordneten Führungskanälen geführt. Es ist an der Ausstellmechanik 10 befestigt und bewirkt die Ausstellbewegung der Ausstellhebel und die Verschiebung der mit der Ausstellmechanik 10 verbundenen hinteren Gleitelemente 19 in den Führungen 13 bzw. 7.

Ein Steuergerät 18, das im gezeigten Ausführungsbeispiel benachbart zum vorderen Antrieb 14 angeordnet ist, empfängt Steuersignale von nicht dargestellten Bedienelementen, mit denen die Benutzer die gewünschten Positionen der Dekkel 2 bzw. 3 auswählen, sowie Positionssignale, die den jeweiligen Positionen der Deckel entsprechen. Das Steuergerät 18 koordiniert die Bewegungen der Antriebe 14 und 15 derart, daß keine Kollisionen oder Beschädigungen der Mechanik auftreten können. Das Steuergerät 18 kann ferner je nach Fahrzeugtyp bestimmte Deckelpositionen ausschließen, bei denen sich unvorteilhafte Windgeräusche einstellen könnten.

Die Führungen 11 sind bevorzugt unterhalb des hinteren Deckels 3 nahe an dessen Außenkanten so angeordnet, daß die Gleitelemente 8 von außen seitlich in deren Führungsbahnen eingreifen. Hierzu ist es vorteilhaft, wenn das vordere Gleitelement 9 des hinteren Deckels 3 etwas weiter innen angeordnet ist, so daß es sich außerhalb des Weges befindet, den das Gleitelement 8 bei einer Verschiebung des vorderen Deckels 2 nach hinten nimmt. Die Gleitelemente 8 weisen bevorzugt nach innen und nach außen Führungselemente, wie Rollen oder Gleitbolzen auf, von denen die nach innen gerichteten mit den Führungen 11 am hinteren Deckel 3 und die nach außen gerichteten mit den dachfesten Führungen 7 im Eingriff stehen. Die dachfesten Führungen 7 weisen entsprechend an ihren Oberseiten Durchtrittsmöglichkeiten für die nach außen gerichteten Führungselemente auf, so daß diese die Führungen 7 verlassen können, sobald die nach innen gerichteten Führungselemente in Eingriff mit den Führungen 11 geraten sind.

Statt einer Verwendung von zwei Antrieben 14 bzw. 15 ist auch eine Betätigung der Deckel 2 und 3 mittels eines einzigen gemeinsamen Antriebs möglich. Dieser steht dann über Antriebskabel und ein- und auskuppelbare Elemente, beispielsweise mit selbsttätig kuppelnden Riegelsteinen, je nach gewünschtem Ablauf einer Öffnungs- und Schließbewegung der beiden Deckel 2 bzw. einzeln oder gleichzeitig mit den Gleitelementen 8 bzw. 19 in Antriebsverbindung. Die Unabhängigkeit der Betätigung beider Deckel und die Variantenvielfalt der Öffnungsmöglichkeiten ist bei einer solchen Ausführungsform beschränkt zugunsten einer kostengünstigeren Lösung. In einer besonders kostengünstigen Variante ist auch eine manuelle Verstellbarkeit der Deckel möglich, ohne den Kerngedanken der Erfindung zu verlassen.

### Bezugszeichenliste

- 1: Fahrzeugdach
- 2: (vorderer) Deckel
- 3: (hinterer) Deckel
- 4: hinterer Teil (von 1)
- 5: Schwenkachse (von 2)
- 6: (vorderes) Gleitelement (von 2)
- 7: Führung
- 8: (hinteres) Gleitelement (von 2)
- 9: (vorderes) Gleitelement (von 3)
- 10: Ausstellmechanik (von 3)
- 11: Führung (für 8 an 3)
- 12: Dachöffnung
- 13: Führung
- 14: Antrieb (für 2)
- 15: Antrieb (für 3)
- 16: Antriebskabel (für 2)
- 17: Antriebskabel (für 3)
- 18: Steuergerät
- 19: (hinteres) Gleitelement (an 10)

## Patentansprüche

1. Fahrzeugdach (1) mit einem vorderen Deckel (2), der mit seiner Hinterkante schwenkbar an einem Gleitelement (6) gelagert ist, das längs einer Führung (7) verfahrbar ist, und mit einem an den vorderen Deckel (2) angrenzenden hinteren Deckel (3), der schwenkbar gelagert ist, **dadurch gekennzeichnet, daß** der hintere Deckel (3) Führungen (11) zur Führung eines hinteren Gleitelements (8) des vorderen Deckels (2) aufweist.

2. Fahrzeugdach nach Anspruch 1, **dadurch gekennzeichnet, daß** das hintere Gleitelement (8) des vorderen Deckels (2) bei einer Verschiebung des vorderen Deckels (2) nach hinten in die Führung (11) am hinteren Deckel (3) eintritt.

3. Fahrzeugdach nach Anspruch 1 oder 2, **dadurch gekennzeichnet, daß** der hintere Deckel (3) mittels einer Ausstellmechanik (10) mit seiner Hinterkante schwenkbar und längs dachfesten Führungen (13) nach Art eines außen geführten Schiebedachs oder eines Spoilerdachs oberhalb eines hinteren Teils (4) des festen Fahrzeugdachs (1) oder nach Art eines Schiebe- Hebe- Dachs unterhalb des hinteren Teils (4) des festen Fahrzeugdachs (1) verschiebbar ist.

4. Fahrzeugdach nach einem der Ansprüche 1 bis 3, **dadurch gekennzeichnet, daß** der vordere Deckel (2) auch bei aus seiner Schließstellung heraus verschwenktem und/oder verschobenen hinteren Deckel (3) mit seinem hinteren Gleitelement (8) in dessen Führungen (11) verschiebbar ist.

5. Fahrzeugdach nach einem der Ansprüche 1 bis 4, **dadurch gekennzeichnet, daß** der vordere Deckel (2) und der hintere Deckel (3) unabhängig voneinander bewegbar sind.

6. Fahrzeugdach nach einem der Ansprüche 1 bis 4, **dadurch gekennzeichnet, daß** der vordere Deckel (2) und der hintere Deckel (3) in ausgestellter und teilweise übereinander gefahrener Position synchron bewegbar sind.

7. Fahrzeugdach nach einem der Ansprüche 1 bis 6, **dadurch gekennzeichnet, daß** der vordere Deckel (2) und der hintere Deckel (3) durch jeweils einen motorischen Antrieb (14, 15) bewegbar sind.

8. Fahrzeugdach nach Anspruch 7, **dadurch gekennzeichnet, daß** die Antriebe (14, 15) für den vorderen Deckel (2) und den hinteren Deckel (3) von einem gemeinsamen Steuergerät (18) angesteuert werden, das in Abhängigkeit von der jeweiligen Position der beiden Deckel (2, 3) bestimmte Bewegungen der Antriebe (14, 15) zuläßt und andere Bewegungen blockiert.

9. Fahrzeugdach nach einem der vorhergehenden Ansprüche, **dadurch gekennzeichnet, daß** die Führungen (11) am hinteren Deckel (3) unterhalb desselben nahe an dessen seitlichen Außenkanten angeordnet sind.

10. Fahrzeugdach nach Anspruch 9, **dadurch gekennzeichnet, daß** hinteren Gleitelemente (8) des vorderen Deckels (2) von außen in die Führungen (11) eingreifen.

## Claims

1. Vehicle roof (1) having a front panel (2) which is mounted at its rear edge such that it can pivot on a sliding element (6), which can be moved along a guide (7), and having a rear panel (3) which adjoins the front panel (2) and is mounted such that it can pivot, **characterized in that** the rear panel (3) has guides (11) to guide a rear sliding element (8) of the front panel (2).

2. Vehicle roof according to Claim 1, **characterized in that**, during a displacement of the front panel (2) towards the rear, the rear sliding element (8) of the front panel (2) enters the guide (11) on the rear panel (3).

3. Vehicle roof according to Claim 1 or 2, **characterized in that** the rear panel (3) can be pivoted at its rear edge by means of an opening mechanism (10) and displaced along guides (13) fixed to the roof, in the manner of an externally guided sliding roof or a spoiler roof, above a rear part (4) of the fixed vehicle roof (1) or, in the manner of a tilt and slide roof, underneath the rear part (4) of the fixed vehicle roof (1).

4. vehicle roof according to one of Claims 1 to 3, **characterized in that**, even when the rear panel (3) is pivoted and/or displaced out of its closed position, the front panel (2) can be displaced with its rear sliding element (8) in its guides (11).

5. vehicle roof according to one of Claims 1 to 4, **characterized in that** the front panel (2) and the rear panel (3) can be moved independently of each other.

6. Vehicle roof according to one of Claims 1 to 4, **characterized in that** the front panel (2) and the rear panel (3) can be moved synchronously in the position in which they are opened and moved partly over each other.

7. Vehicle roof according to one of Claims 1 to 6, **characterized in that** the front panel (2) and the rear panel (3) can respectively be moved by a motor drive (14, 15).

8. Vehicle roof according to Claim 7, **characterized in that** the drives (14, 15) for the front panel (2) and the rear panel (3) are driven by a common control device (18) which, depending on the respective position of the two panels (2, 3), permits specific movements of the drives (14, 15) and blocks other movements.

9. Vehicle roof according to one of the preceding claims, **characterized in that** the guides (11) on the rear panel (3) are arranged underneath the same, close to its lateral outer edges.

10. vehicle roof according to Claim 9, **characterized in that** rear sliding elements (8) of the front panel (2) engage in the guides (11) from outside.

## Revendications

1. Toit de véhicule (1) comprenant un panneau avant (2), qui est monté avec son arête arrière de manière pivotante sur un élément coulissant (6), qui peut être déplacé le long d'un guidage (7), et comprenant un panneau arrière (3) adjacent au panneau avant (2), lequel panneau arrière est monté de manière pivotante, **caractérisé en ce que** le panneau arrière (3) comprend des guidages (11) destinés à guider un élément coulissant arrière (8) du panneau avant (2).

2. Toit de véhicule selon la revendication 1, **caractérisé en ce que** l'élément coulissant arrière (8) du panneau avant (2), lorsque le panneau avant (2) est déplacé vers l'arrière, pénètre dans le guidage (11) du panneau arrière (3).

3. Toit de véhicule selon la revendication 1 ou 2, **caractérisé en ce que** le panneau arrière (3) peut pivoter au moyen d'un mécanisme d'ouverture (10) avec son arête arrière et être déplacé le long de guidages fixés au toit (13) à la façon d'un toit coulissant guidé à l'extérieur ou d'un toit déflecteur au-dessus d'une partie arrière (4) du toit de véhicule fixe (1) ou à la façon d'un toit ouvrant basculant au-dessous de la partie arrière (4) du toit de véhicule fixe (1).

4. Toit de véhicule selon l'une quelconque des revendications 1 à 3, **caractérisé en ce que** le panneau avant (2), même lorsque le panneau arrière (3) est pivoté et/ou déplacé hors de sa position fermée, peut être déplacé avec son élément coulissant arrière (8) dans les guidages (11) de celui-ci.

5. Toit de véhicule selon l'une quelconque des revendications 1 à 4, **caractérisé en ce que** le panneau avant (2) et le panneau arrière (3) sont mobiles indépendamment l'un de l'autre.

6. Toit de véhicule selon l'une quelconque des revendications 1 à 4, **caractérisé en ce que** le panneau avant (2) et le panneau arrière (3) peuvent être déplacés de manière synchrone dans une position ouverte et en partie superposée.

7. Toit de véhicule selon l'une quelconque des revendications 1 à 6, **caractérisé en ce que** le panneau avant (2) et le panneau arrière (3) peuvent être déplacés par respectivement un entraînement motorisé (14, 15).

8. Toit de véhicule selon la revendication 7, **caractérisé en ce que** les entraînements (14, 15) pour le panneau avant (2) et le panneau arrière (3) sont commandés par un appareil de commande (18) commun, qui autorise en fonction de la position respective des deux panneaux (2, 3) des déplacements définis des entraînements (14, 15) et bloque d'autres déplacements.

9. Toit de véhicule selon l'une quelconque des revendications précédentes, **caractérisé en ce que** les guidages (11) sur le panneau arrière (3) sont disposés au-dessous de celui-ci à proximité des arêtes latérales de ce dernier.

10. Toit de véhicule selon la revendication 9, **caractérisé en ce que** les éléments coulissants arrière (8) du panneau avant (2) se mettent en prise de l'extérieur dans les guidages (11).
